# EUROPÄISCHE PATENTSCHRIFT

(11) **EP 4 512 692 B1**
(45) Veröffentlichungstag und Bekanntmachung des Hinweises auf die Patenterteilung: **20.05.2026**
(21) Anmeldenummer: 24195700.0
(22) Anmeldetag: 21.08.2024
(51) Int. Cl.: B62D 5/04

(54) **MOTORLENKSYSTEM FÜR EINE ELEKTRONISCHE LENKUNG EINES FAHRZEUGES, FAHRZEUG**
MOTOR STEERING SYSTEM FOR AN ELECTRONIC STEERING SYSTEM OF A VEHICLE, VEHICLE
SYSTÈME DE DIRECTION DE MOTEUR POUR DIRECTION ÉLECTRONIQUE DE VÉHICULE, VÉHICULE

(30) Priorität: 22.08.2023 DE 102023208011
(43) Veröffentlichungstag der Anmeldung: 26.02.2025
(73) Patentinhaber: VOLKSWAGEN AG, 38440 Wolfsburg (DE)
(72) Erfinder: Kreis, Christopher, 38126 Braunschweig (DE); Reinbold, Felix, 38104 Braunschweig (DE); Schumann, Heiko, 38116 Braunschweig (DE); Herzig, Martin Clemens, 38116 Braunschweig (DE); Losch, Christoph, 38102 Braunschweig (DE); Buuck, Sebastian, 38112 Braunschweig (DE)

(56) Entgegenhaltungen:
- EP-B1- 3 348 451
- DE-A1- 102006 051 799

## Beschreibung

Die Erfindung betrifft ein Motorlenksystem für eine elektronische Lenkung eines Fahrzeuges sowie ein Fahrzeug.

Lenksysteme, die elektronisch gesteuert werden (auch Steer-by-Wire (SbW) genannt) benötigen keine Lenkzwischenwelle, da die mechanische Verbindung zum Lenkrad entfällt. Ein solches fortschrittliches Lenksystem ist beispielsweise aus der EP 3 348 451 B1 bekannt.

Bei solchen elektronischen Lenksystemen wird das Lenkgefühl von einem Force-Feedback Aktuator (FFA) bereitgestellt, der direkt oder über ein Getriebe mit dem Lenkrad verbunden ist. Daraus ergeben sich hohe Anforderungen hinsichtlich der funktionalen Sicherheit. Insbesondere muss der Motor zur Steuerung der Lenkung stets verfügbar sein. Es muss unter allen Umständen verhindert werden, dass das System durch äußere Einwirkung unmittelbar und vollständig ausfällt.

Eine mögliche Ursache für die Beeinträchtigung eines Lenksystems ist eindringendes Wasser. Aus der DE 10 2006 051 799 A1 ist ein Lenksystem bekannt, bei dem ein Flüssigkeitssensor eindringendes Wasser erkennt. Bei zumindest teilweise mechanischen Lenksystemen kann bei einem von Wasser verursachtem Ausfall elektronischer oder mechanischer Bauteile die Lenkbarkeit und damit die Kontrollierbarkeit durch den Fahrer durch die mechanische Verbindung zur Lenksäule sichergestellt werden.

Bei einem Steer-by-Wire-Lenksystem ist das nicht möglich. Daher sollte Wasser innerhalb des Lenksystems erkannt werden, bevor es zu Schädigungen an mechanischen oder elektrischen Bauteilen kommt.

Eine Herausforderung besteht darin, dass die Sensorik das Wasser rechtzeitig sensiert, bevor eine Bauteilschädigung erfolgt.

Es ist daher eine Aufgabe der vorliegenden Erfindung, wenigstens einen der voranstehend beschriebenen Nachteile zumindest teilweise zu überwinden. Insbesondere ist es Aufgabe der Erfindung, ein Motorlenksystem und ein Fahrzeug bereitzustellen, bei dem Flüssigkeiten frühzeitig erkannt werden, sodass flüssigkeitsbedingte Ausfälle vermieden und die Zuverlässigkeit des Motorlenksystems erhöht wird.

Die voranstehende Aufgabe wird gelöst durch ein Motorlenksystem mit den Merkmalen des unabhängigen Patentanspruchs 1 sowie durch ein Fahrzeug mit den Merkmalen des unabhängigen Patentanspruchs 10. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Motorlenksystem beschrieben sind, selbstverständlich auch im Zusammenhang mit dem erfindungsgemäßen Fahrzeug und jeweils umgekehrt, sodass bezüglich der Offenbarung zu den einzelnen Erfindungsaspekten stets wechselseitig Bezug genommen wird bzw. werden kann.

Erfindungsgemäß vorgesehen ist ein Motorlenksystem für eine elektronische Lenkung eines Fahrzeuges. Das Motorlenksystem umfasst einen Motor, der dazu ausgeführt ist, einen Antrieb für eine Lenkbewegung des Fahrzeuges bereitzustellen und mit einem Getrieberaum verbunden zu werden. Ferner umfasst das Motorlenksystem ein Motorsteuergerät, das dazu ausgeführt ist, den Motor zu steuern, wobei das Motorsteuergerät am Motor auf einer vom Getrieberaum abgewandten Seite des Motors angeordnet ist, sowie einen Flüssigkeitskanal, welcher die vom Getrieberaum abgewandte Seite des Motors mit einer dem Getrieberaum zugewandten Seite des Motors fluidisch verbindet. Ein Flüssigkeitssensor, welcher am Motor angeordnet ist, ist ebenfalls im Motorlenksystem vorgesehen. Der Flüssigkeitssensor ist gemäß der Erfindung durch den Flüssigkeitskanal mit dem Getrieberaum verbindbar.

Mit anderen Worten kann gemäß der Erfindung ein Antriebssystem für ein Steer-by-Wire-Lenksystem vorgesehen sein, bei dem ein elektrischer Antrieb mit einer Steuerung vorgesehen und mit dem Getrieberaum des Fahrzeuges verbindbar ist. Am elektrischen Antrieb kann eine Durchführung vorgesehen sein, durch welche Flüssigkeit entlang des elektrischen Antriebs fließen und von einem Flüssigkeitssensor, der am elektrischen Antrieb angeordnet ist, sensiert werden kann.

Unter einem Motorlenksystem kann jede Vorrichtung verstanden werden, welche dazu ausgeführt ist, eine direkte mechanische Verbindung zwischen einem Lenkrad und Rädern eines Fahrzeuges durch elektronische Signale zu ersetzen und die Lenkung zu ermöglichen. Derartige Lenksysteme ermöglichen eine präzisere und flexiblere Steuerung des Fahrzeugs.

Unter einer elektronischen Lenkung kann aufgefasst werden, dass eine Bewegungseingabe am Lenkrad als elektronisches Signal erfasst wird. Dieses Signal kann dann an ein Steuergerät übertragen werden, welches die gewünschte Steuerung des Fahrzeuges berechnet und die Aktuatoren, welche die steuernden Bauteile verstellen können, ansteuern.

Das Fahrzeug kann als Kraftfahrzeug ausgeführt sein. Bei einem Kraftfahrzeug kann es sich prinzipiell um jede Art von motorgetriebenem Fahrzeug handeln. Das Kraftfahrzeug kann als Land-, Wasser- oder Luftfahrzeug ausgeführt sein. Insbesondere kann es sich bei dem Kraftfahrzeug um einen PKW oder LKW handeln. Das Kraftfahrzeug kann ferner einen Verbrennungsmotor und/oder einen Elektromotor aufweisen. Es kann ebenfalls vorgesehen sein, dass das Kraftfahrzeug ausschließlich elektrisch angetrieben ist.

Unter einem Motor kann eine Vorrichtung verstanden werden, welche dazu ausgeführt ist, einen Antrieb zu erzeugen, welcher dazu geeignet ist, insbesondere über ein Getriebe eine Steuerbewegung des Fahrzeuges auszuführen.

Im Sinne der Erfindung kann unter einer Lenkbewegung eine Bewegung des Fahrzeuges verstanden werden, welche einer, insbesondere verarbeiteten, Lenkeingabe entspricht. Die Lenkeingabe kann durch eine Person und/oder programmatisch erfolgen.

Ein Getrieberaum ist ein Bereich, in welchen zumindest Teile eines Getriebes anordenbar sind, wobei insbesondere das Getriebe zur Übertragung des vom Motor erzeugten Antriebs auf Steuerelemente, insbesondere Räder des Fahrzeuges, ausgeführt ist.

Das Motorsteuergerät kann als eine Vorrichtung aufgefasst werden, welches zumindest dazu ausgeführt ist, den Motor derart zu anzusteuern, dass der für die Lenkbewegung notwendige Antrieb erzeugt wird. Es kann ferner vorgesehen sein, dass das Motorsteuergerät zumindest den Motor und/oder den Flüssigkeitssensor mit Energie versorgt. Ebenfalls kann vorgesehen sein, dass das Motorsteuergerät Messwerte des Flüssigkeitssensors zumindest empfängt, verarbeitet oder ausgibt.

In der Regel kann der Motor eine vorbestimmte Einbaulage gegenüber dem Getrieberaum aufweisen. Dementsprechend weist der Motor in dieser vorbestimmten Einbaulage eine zum Getrieberaum abgewandte Seite und zugewandte Seite auf. Dabei ist die abgewandte Seite zumindest mehrheitlich weiter vom Getrieberaum entfernt als die zum Getrieberaum zugewandte Seite.

Ein Flüssigkeitskanal kann als ein rohrartiger Körper verstanden werden, der dazu ausgeführt ist, eine Flüssigkeit durch einen Innenraum des Rohrs zu leiten. Der Flüssigkeitskanal kann als eine Bohrung ausgeführt sein. Ferner kann vorgesehen sein, dass der Flüssigkeitskanal als Rohr und/oder, insbesondere flexibler, Schlauch ausgeführt ist.

Ein Flüssigkeitssensor kann eine Vorrichtung sein, welche dazu ausgeführt ist, zumindest das Vorhandensein einer Flüssigkeit zu detektieren. Ferner kann vorgesehen sein, dass der Flüssigkeitssensor zumindest eine Menge oder die Art einer Flüssigkeit bestimmen kann. Der Flüssigkeitssensor kann ferner eine Ausgabeschnittstelle aufweisen, über welche von dem Flüssigkeitssensor aufgenommene Messwerte ausgebbar sind. Weitere Details der Art der Flüssigkeitsmessung werden nachfolgend beschrieben.

Der Flüssigkeitssensor ist über den Flüssigkeitskanal mit dem Getrieberaum verbindbar. Mit anderen Worten steht der Flüssigkeitssensor über den Flüssigkeitskanal mit dem Getrieberaum in fluidischem Kontakt, wenn zumindest der Motor sich in einem mit dem Getrieberaum verbundenen Zustand befindet.

Insgesamt wird durch das erfindungsgemäße Motorlenksystem der Vorteil erreicht, dass Flüssigkeiten im System frühzeitig erkannt werden, sodass flüssigkeitsbedingte Ausfälle vermieden und die Zuverlässigkeit des Motorlenksystems erhöht wird. In der Regel dringt Feuchtigkeit bzw. Flüssigkeit von den Steuerelementen, insbesondere über Faltenbälge an der Lenkachse des Fahrzeuges, in das Lenksystem ein und dringt bis zum Getrieberaum vor. Durch die Anordnung des Motorsteuergeräts auf der von dem Getrieberaum abgewandten Seite sind die gegenüber Flüssigkeit empfindlichen Teile möglichst weit von dem Getrieberaum entfernt. Durch den Flüssigkeitskanal, der im eingebauten Zustand direkt mit dem Getrieberaum verbunden ist, kann die Flüssigkeit in diesen eindringen und kommt dadurch unmittelbar in Kontakt mit dem Flüssigkeitssensor. Dieser detektiert die Flüssigkeit, bevor diese in das Motorsteuergerät oder andere empfindliche Bauteile, ggf. auch in den Motor des Motorlenksystems, eindringen kann.

Im Rahmen der Erfindung kann es von Vorteil sein, dass der Flüssigkeitssensor zumindest teilweise im Flüssigkeitskanal angeordnet ist. Die Anordnung im Flüssigkeitskanal bietet den Vorteil, dass die Flüssigkeit nicht erst durch den Flüssigkeitskanal hindurchdringen muss, bevor sie detektiert werden kann. Somit kann die Flüssigkeit besonders frühzeitig erkannt werden, was die Ausfallssicherheit des Motorlenksystems weiter erhöht.

Im Rahmen der Erfindung ist es denkbar, dass der Flüssigkeitskanal derart am Motor angeordnet und ausgeführt ist, dass in einem mit dem Getrieberaum verbundenen Zustand Flüssigkeiten vom Getrieberaum in Richtung der vom Getrieberaum abgewandten Seite des Motors laufen. Hierdurch wird der Vorteil erreicht, dass allein durch die Schwerkraft bzw. durch die Einbaulage die Flüssigkeit dem Flüssigkeitssensor zugeführt wird. Dadurch ist das Motorlenksystem besonders einfach und kostengünstig aufzubauen. Zudem wird die Ausfallsicherheit durch weniger aktive Bauteile erhöht.

Es kann im Rahmen der Erfindung vorgesehen sein, dass der Flüssigkeitskanal zumindest teilweise am geodätisch tiefsten Punkt des Motors verläuft, wenn der Motor mit dem Getrieberaum verbunden ist. Durch diesen Verlauf wird der Vorteil erreicht, dass die Flüssigkeit in den Flüssigkeitskanal eindringt und so bevorzugt zum Flüssigkeitssensor geleitet wird. Besonders vorteilhaft ist der Flüssigkeitssensor am geodätisch tiefsten Punkt des Flüssigkeitskanals angeordnet. Dann sammelt sich bedingt durch die Schwerkraft die Flüssigkeit direkt am Flüssigkeitssensor und ist so besonders einfach zu detektieren.

Es ist ferner denkbar, dass der Flüssigkeitssensor zumindest resistiv oder kapazitiv ausgeführt ist. Die Messung des elektrischen Widerstands ist besonders zuverlässig und einfach. Die Messung der Kapazität lässt ebenfalls auf einfache und kostengünstige Art und Weise einen Rückschluss auf das Vorhandensein von Flüssigkeit zu. Ferner können im Rahmen der Erfindung auch andere Arten von Flüssigkeitssensoren vorgesehen sein, z. B. Füllstandssensoren oder Durchflusssensoren.

Auch ist es denkbar, dass ein Feststoff vorgesehen ist, welcher bei Kontakt mit einer Flüssigkeit die Leitfähigkeit einer Flüssigkeit erhöht, wobei insbesondere der Feststoff zumindest im Flüssigkeitskanal oder am Flüssigkeitssensor angeordnet ist. Die Erhöhung der Leitfähigkeit reduziert den Widerstand, was insbesondere die Messung über einen resistiv arbeitenden Flüssigkeitssensor vereinfacht. Durch die Anordnung im Flüssigkeitskanal oder am Flüssigkeitssensor wird zudem sichergestellt, dass die Flüssigkeit in Bezug auf den Widerstand optimiert ist, wenn diese auf den Flüssigkeitssensor trifft.

Im Rahmen der Erfindung ist es optional möglich, dass der Flüssigkeitssensor das Motorsteuergerät fluidisch von dem Flüssigkeitskanal abdichtet und/oder dass der Flüssigkeitssensor auf einer Platine des Motorsteuergeräts angeordnet ist. Durch die Abdichtung des Flüssigkeitssensors ist ein besonders einfacher Aufbau ermöglicht, da keine weiteren Dichtungen notwendig sind. Es kann insbesondere vorgesehen sein, dass die Dichtung des Flüssigkeitssensors am Ende des Flüssigkeitskanals vorgesehen ist. Die Anordnung des Flüssigkeitssensors vereinfacht die Montage des Flüssigkeitssensors innerhalb des Motorlenksystems, da dieser nicht als einzelnes Bauteil verbunden werden muss.

Ferner kann es im Rahmen der Erfindung vorgesehen sein, dass der Motor in einem Motorgehäuse angeordnet ist und/oder dass das Motorsteuergerät in einem Motorsteuergerätgehäuse angeordnet ist, wobei insbesondere das Motorgehäuse und das Motorsteuergerätgehäuse voneinander fluidisch abgedichtet sind. Die Anordnung des Motors in einem Gehäuse bietet erhöhten Schutz gegenüber eindringende Feuchtigkeit. Ein ähnlicher Schutz wird für das Motorsteuergerät durch eine Anordnung in einem Motorsteuergerätgehäuse erreicht. Wenn beide gegeneinander abgedichtet sind, kann zudem die Feuchtigkeit nicht von einem Gehäuse in das andere fließen, was die Ausfallsicherheit des Motorlenksystems insgesamt erhöht.

In Bezug auf die vorliegende Erfindung ist es vorstellbar, dass der Motor mit dem Fluidkanal im Getrieberaum aufnehmbar ist, und/oder dass der Motor als ein vom Getrieberaum separates Bauteil mit einem Motorgehäuse ausgeführt ist, wobei das Motorgehäuse durch zumindest ein Befestigungsmittel mit dem Getrieberaum verbindbar ist. Die Anordnung des Motors im Getrieberaum kann den Bauraum des Lenksystems insgesamt reduzieren. Durch eine Separation des Motors kann der Vorteil erreicht werden, dass zum einen die Montage erleichtert ist und zudem weitere Maßnahmen wie etwa Dichtungen vorsehbar sind, um das Eindringen von Feuchtigkeit besser zu vermeiden.

Die obenstehende Aufgabe wird ferner gelöst durch ein erfindungsgemäßes Fahrzeug, insbesondere Kraftfahrzeug, umfassend zumindest ein erfindungsgemäßes Motorlenksystem.

Damit bringt ein erfindungsgemäßes Fahrzeug die gleichen Vorteile mit sich, wie sie ausführlich mit Bezug auf ein erfindungsgemäßes Motorlenksystem beschrieben worden sind.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei ist die Erfindung in den folgenden Figuren gezeigt:
- Fig. 1:: ein erfindungsgemäßes Motorlenksystem in einem eingebauten Zustand innerhalb eines Lenksystems,
- Fig. 2:: ein Ausführungsbeispiel eines erfindungsgemäßen Motorlenksystems,
- Fig. 3:: ein weiteres Ausführungsbeispiel eines erfindungsgemäßen Motorlenksystems mit dichtendem Sensor,
- Fig. 4:: ein weiteres Ausführungsbeispiel eines erfindungsgemäßen Motorlenksystems mit ringförmigen Sensor, und
- Fig. 5:: ein erfindungsgemäßes Fahrzeug mit erfindungsgemäßem Sensor.

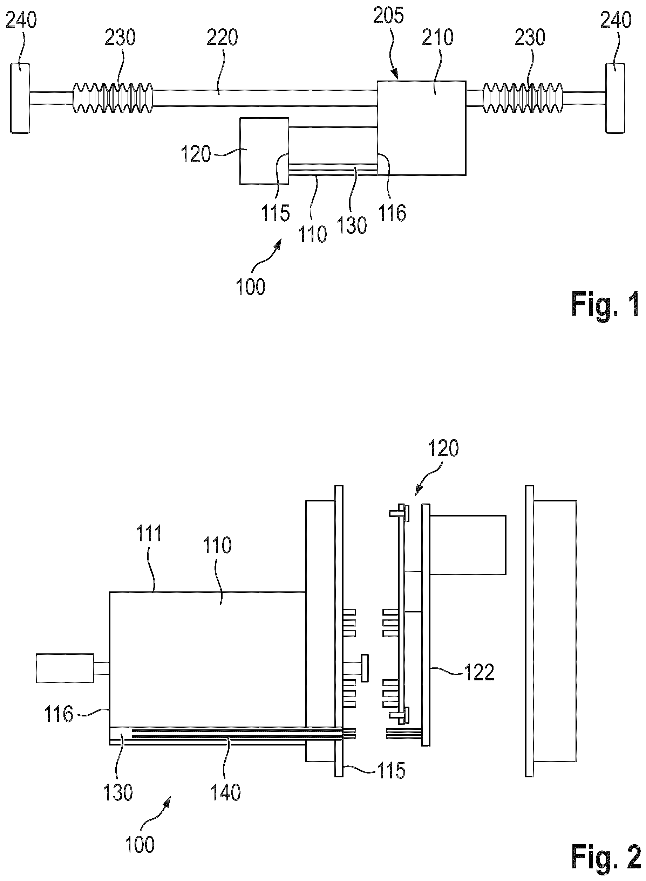

Figur 1 zeigt ein erfindungsgemäßes Motorlenksystem 100 in einem eingebauten Zustand innerhalb eines Lenksystems. Lenkeingaben werden von dem Motorsteuergerät 120 verarbeitet und der Motor 110 so angesteuert, dass die Lenkung über ein Getriebe 205 (nicht detailliert dargestellt), welches innerhalb eines Getrieberaums 210 angeordnet ist, an die Steuerelemente 240, insbesondere Räder des Fahrzeuges 200, entsprechend der Lenkeingaben angetrieben wird. Insbesondere über die Faltenbalge 230 kann Feuchtigkeit in ein Lenkgehäuse 220 eindringen. Von dort aus läuft die Flüssigkeit in den Getrieberaum 210.

Erfindungsgemäß vorgesehen ist ein Motorlenksystem 100 für eine elektronische Lenkung eines Fahrzeuges 200, umfassend:
- einen Motor 110, der dazu ausgeführt ist, einen Antrieb für eine Lenkbewegung des Fahrzeuges 200 bereitzustellen und mit einem Getrieberaum 210 verbunden zu werden,
- ein Motorsteuergerät 120, das dazu ausgeführt ist, den Motor 110 zu steuern, wobei das Motorsteuergerät 120 am Motor 110 auf einer vom Getrieberaum 210 abgewandten Seite 115 des Motors 110 angeordnet ist, sowie
- einen Flüssigkeitskanal 130, welcher die vom Getrieberaum 210 abgewandte Seite 115 des Motors 110 mit einer dem Getrieberaum 210 zugewandten Seite 116 des Motors 110 fluidisch verbindet,
- einen Flüssigkeitssensor 140, welcher am Motor 110 angeordnet ist,
wobei der Flüssigkeitssensor 140 durch den Flüssigkeitskanal 130 mit dem Getrieberaum 210 verbindbar ist.

Insgesamt wird durch das erfindungsgemäße Motorlenksystem 100 der Vorteil erreicht, dass Flüssigkeiten im System frühzeitig erkannt werden, sodass flüssigkeitsbedingte Ausfälle vermieden und die Zuverlässigkeit des Motorlenksystems 100 erhöht wird. In der Regel dringt Feuchtigkeit bzw. Flüssigkeit von den Steuerelementen 240, insbesondere über Faltenbälge an der Lenkachse des Fahrzeuges 200, in das Lenksystem ein und dringt bis zum Getrieberaum 210 vor. Durch die Anordnung des Motorsteuergeräts 120 auf der von dem Getrieberaum 210 abgewandten Seite 115 sind die gegenüber Flüssigkeit empfindlichen Teile möglichst weit von dem Getrieberaum 210 entfernt. Durch den Flüssigkeitskanal 130, der im eingebauten Zustand direkt mit dem Getrieberaum 210 verbunden ist, kann die Flüssigkeit in diesen eindringen und kommt dadurch unmittelbar in Kontakt mit dem Flüssigkeitssensor 140. Dieser detektiert die Flüssigkeit, bevor diese in das Motorsteuergerät 120 oder andere empfindliche Bauteile, ggf. auch im Motor 110 des Motorlenksystems 100, eindringen kann.

Im Rahmen der Erfindung kann es von Vorteil sein, dass der Flüssigkeitssensor 140 zumindest teilweise im Flüssigkeitskanal 130 angeordnet ist. Dies ist in Fig. 2 dargestellt. Die Anordnung im Flüssigkeitskanal 130 selbst bietet den Vorteil, dass die Flüssigkeit nicht erst durch den Flüssigkeitskanal 130 hindurchdringen muss, bevor sie detektiert werden kann. Somit kann die Flüssigkeit besonders frühzeitig erkannt werden, was die Ausfallssicherheit des Motorlenksystems 100 weiter erhöht.

Ebenfalls in der Fig. 2 ist angedeutet, dass der Flüssigkeitskanal 130 derart am Motor 110 angeordnet und ausgeführt ist, dass in einem mit dem Getrieberaum 210 verbundenen Zustand Flüssigkeiten vom Getrieberaum 210 in Richtung der vom Getrieberaum 210 abgewandten Seite 115 des Motors 110 laufen. Hierdurch wird der Vorteil erreicht, dass allein durch die Schwerkraft bzw. durch die Einbaulage die Flüssigkeit dem Flüssigkeitssensor 140 zugeführt wird. Dadurch ist das Motorlenksystem 100 besonders einfach und kostengünstig aufzubauen. Zudem wird die Ausfallsicherheit durch weniger aktive Bauteile erhöht.

Es kann im Rahmen der Erfindung vorgesehen sein, dass der Flüssigkeitskanal 130 zumindest teilweise am geodätisch tiefsten Punkt des Motors 110 verläuft, wenn der Motor 110 mit dem Getrieberaum 210 verbunden ist. Durch diesen Verlauf wird der Vorteil erreicht, dass die Flüssigkeit in den Flüssigkeitskanal 130 eindringt und so bevorzugt zum Flüssigkeitssensor 140 geleitet wird. Besonders vorteilhaft ist der Flüssigkeitssensor 140 am geodätisch tiefsten Punkt des Flüssigkeitskanals 130 angeordnet.

Es ist ferner denkbar, dass der Flüssigkeitssensor 140 zumindest resistiv oder kapazitiv ausgeführt ist. Die Messung des elektrischen Widerstands ist besonders zuverlässig und einfach. Die Messung der Kapazität lässt ebenfalls auf einfache und kostengünstige Art und Weise einen Rückschluss auf das Vorhandensein von Flüssigkeit zu. Ferner können im Rahmen der Erfindung auch andere Arten von Flüssigkeitssensoren 140 vorgesehen sein, z. B. Füllstandssensoren oder Durchflusssensoren.

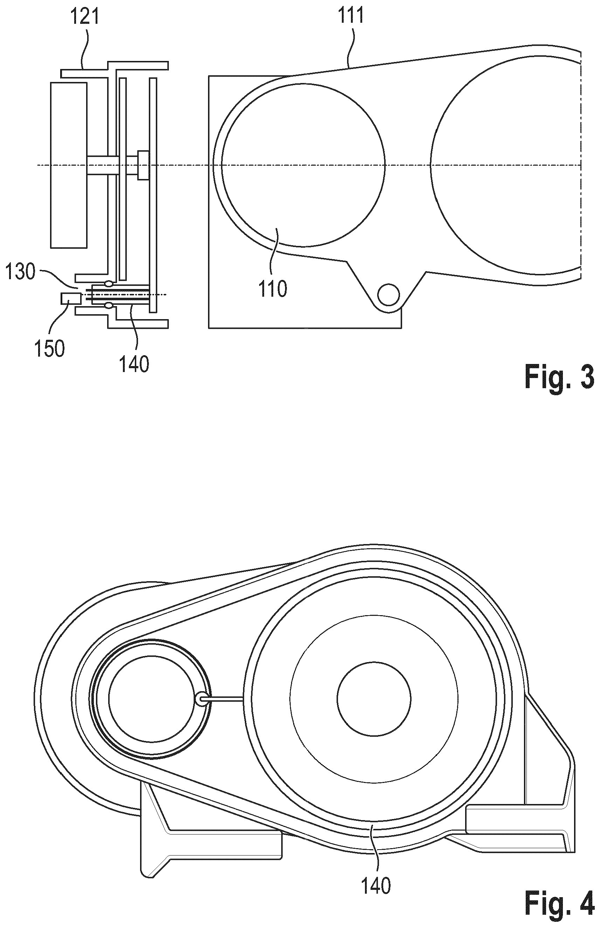

Auch ist es denkbar, dass ein Feststoff 150 vorgesehen ist, welcher bei Kontakt mit einer Flüssigkeit die Leitfähigkeit einer Flüssigkeit erhöht, wobei insbesondere der Feststoff 150 zumindest im Flüssigkeitskanal 130 oder am Flüssigkeitssensor 140 angeordnet ist. Der Feststoff 150 ist beispielhaft in Fig. 3 in der Nähe des Flüssigkeitssensors 140 angedeutet. Die Erhöhung der Leitfähigkeit reduziert den Widerstand, was insbesondere die Messung über einen resistiv arbeitenden Flüssigkeitssensor 140 vereinfacht. Durch die Anordnung im Flüssigkeitskanal 130 oder am Flüssigkeitssensor 140 wird zudem sichergestellt, dass die Flüssigkeit in Bezug auf den Widerstand optimiert ist, wenn diese auf den Flüssigkeitssensor 140 trifft.

Ebenfalls in der Fig. 3 gezeigt ist, dass der Flüssigkeitssensor 140 das Motorsteuergerät 120 fluidisch von dem Flüssigkeitskanal 130 abdichtet und/oder dass der Flüssigkeitssensor 140 auf einer Platine 122 des Motorsteuergeräts 120 angeordnet ist. Durch die Abdichtung des Flüssigkeitssensors 140 ist ein besonders einfacher Aufbau ermöglicht, da keine weiteren Dichtungen notwendig sind. Es kann dabei insbesondere vorgesehen sein, dass die Dichtung des Flüssigkeitssensors 140 am Ende des Flüssigkeitskanals 130 vorgesehen ist. Die Anordnung des Flüssigkeitssensors 140 vereinfacht die Montage des Flüssigkeitssensors 140 innerhalb des Motorlenksystems 100, da dieser nicht als einzelnes Bauteil verbunden werden muss.

Fig. 3 zeigt außerdem, dass im Rahmen der Erfindung vorgesehen sein kann, dass der Motor 110 in einem Motorgehäuse 111 angeordnet ist und/oder dass das Motorsteuergerät 120 in einem Motorsteuergerätgehäuse 121 angeordnet ist, wobei insbesondere das Motorgehäuse 111 und das Motorsteuergerätgehäuse 121 voneinander fluidisch abgedichtet sind. Die Anordnung des Motors 110 in einem Gehäuse bietet erhöhten Schutz gegenüber eindringende Feuchtigkeit. Ein ähnlicher Schutz wird für das Motorsteuergerät 120 durch eine Anordnung in einem Motorsteuergerätgehäuse 121 erreicht. Wenn beide gegeneinander abgedichtet sind, kann zudem die Feuchtigkeit nicht von einem Gehäuse in das andere fließen, was die Ausfallsicherheit des Motorlenksystems 100 insgesamt erhöht.

In Bezug auf die vorliegende Erfindung ist es ferner vorstellbar und in Fig. 1 angedeutet, dass der Motor 110 mit dem Fluidkanal im Getrieberaum 210 aufnehmbar ist, und/oder dass der Motor 110 als ein vom Getrieberaum 210 separates Bauteil mit einem Motorgehäuse 111 ausgeführt ist, wobei das Motorgehäuse 111 durch zumindest ein Befestigungsmittel mit dem Getrieberaum 210 verbindbar ist. Die Anordnung des Motors 110 im Getrieberaum 210 kann den Bauraum des Lenksystems insgesamt reduzieren. Durch eine Separation des Motors 110 kann der Vorteil erreicht werden, dass zum einen die Montage erleichtert ist und zudem weitere Maßnahmen wie etwa Dichtungen vorsehbar sind, um das Eindringen von Feuchtigkeit besser zu vermeiden.

Fig. 4 zeigt eine Variante des Flüssigkeitssensors 140, bei der dieser als zwei umlaufende Leitungen ausgeführt ist. Dies bietet den Vorteil, dass die Flüssigkeit umlaufend, also unabhängig von dem radialen Eindringpunkt, erfasst werden kann. Insbesondere können die umlaufenden Leitungen aus verzinntem Kupfer gefertigt sein, wodurch die Haltbarkeit des Flüssigkeitssensors 140 erhöht wird.

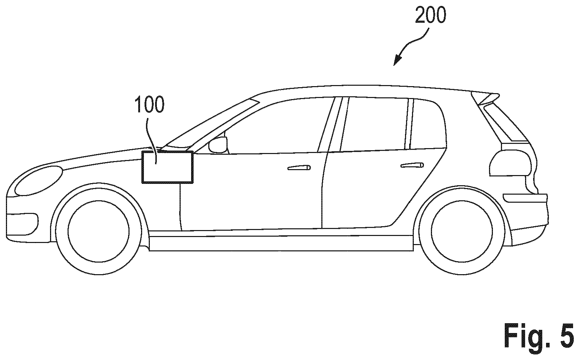

Die obenstehende Aufgabe wird ferner gelöst durch ein erfindungsgemäßes Fahrzeug 200, umfassend zumindest ein erfindungsgemäßes Motorlenksystem 100. Ein solches Fahrzeug 200 ist in der Fig. 5 dargestellt.

Damit bringt ein erfindungsgemäßes Fahrzeug 200 die gleichen Vorteile mit sich, wie sie ausführlich mit Bezug auf ein erfindungsgemäßes Motorlenksystem 100 beschrieben worden sind.

Die voranstehende Erläuterung der Ausführungsformen beschreibt die vorliegende Erfindung ausschließlich im Rahmen von Beispielen.

### Bezugszeichenliste

- 100: Motorlenksystem
- 110: Motor
- 111: Motorgehäuse
- 115: vom Getrieberaum abgewandte Seite
- 116: zum Getrieberaum zugewandte Seite
- 120: Motorsteuergerät
- 121: Motorsteuergerätgehäuse
- 122: Platine
- 130: Flüssigkeitskanal
- 140: Flüssigkeitssensor
- 150: Feststoff

- 200: Fahrzeug
- 205: Getriebe
- 210: Getrieberaum
- 220: Lenkgehäuse
- 230: Faltenbalg
- 240: Steuerelemente

## Patentansprüche

1. Motorlenksystem (100) für eine elektronische Lenkung eines Fahrzeuges (200), umfassend:
- einen Motor (110), der dazu ausgeführt ist, einen Antrieb für eine Lenkbewegung des Fahrzeuges (200) bereitzustellen und mit einem Getrieberaum (210) verbunden zu werden,
- ein Motorsteuergerät (120), das dazu ausgeführt ist, den Motor (110) zu steuern, wobei das Motorsteuergerät (120) am Motor (110) auf einer vom Getrieberaum (210) abgewandten Seite (115) des Motors (110) angeordnet ist, sowie
- einen Flüssigkeitskanal (130), welcher die vom Getrieberaum (210) abgewandte Seite (115) des Motors (110) mit einer dem Getrieberaum (210) zugewandten Seite (116) des Motors (110) fluidisch verbindet,
- einen Flüssigkeitssensor (140), welcher am Motor (110) angeordnet ist,
wobei der Flüssigkeitssensor (140) durch den Flüssigkeitskanal (130) mit dem Getrieberaum (210) verbindbar ist.

2. Motorlenksystem (100) nach Anspruch 1,
**dadurch gekennzeichnet,**
**dass** der Flüssigkeitssensor (140) zumindest teilweise im Flüssigkeitskanal (130) angeordnet ist.

3. Motorlenksystem (100) nach Anspruch 1 oder 2,
**dadurch gekennzeichnet,**
**dass** der Flüssigkeitskanal (130) derart am Motor (110) angeordnet und ausgeführt ist, dass in einem mit dem Getrieberaum (210) verbundenen Zustand Flüssigkeiten vom Getrieberaum (210) in Richtung der vom Getrieberaum (210) abgewandten Seite (115) des Motors (110) laufen.

4. Motorlenksystem (100) nach einem der vorhergehenden Ansprüche,
**dadurch gekennzeichnet,**
**dass** der Flüssigkeitskanal (130) zumindest teilweise am geodätisch tiefsten Punkt des Motors (110) verläuft, wenn der Motor (110) mit dem Getrieberaum (210) verbunden ist.

5. Motorlenksystem (100) nach einem der vorhergehenden Ansprüche,
**dadurch gekennzeichnet,**
**dass** der Flüssigkeitssensor (140) zumindest resistiv oder kapazitiv ausgeführt ist.

6. Motorlenksystem (100) nach einem der vorhergehenden Ansprüche,
**dadurch gekennzeichnet,**
**dass** ein Feststoff (150) vorgesehen ist, welcher bei Kontakt mit einer Flüssigkeit die Leitfähigkeit einer Flüssigkeit erhöht, wobei insbesondere der Feststoff (150) zumindest im Flüssigkeitskanal (130) oder am Flüssigkeitssensor (140) angeordnet ist.

7. Motorlenksystem (100) nach einem der vorhergehenden Ansprüche,
**dadurch gekennzeichnet,**
**dass** der Flüssigkeitssensor (140) das Motorsteuergerät (120) fluidisch von dem Flüssigkeitskanal (130) abdichtet und/oder dass der Flüssigkeitssensor (140) auf einer Platine (122) des Motorsteuergeräts (120) angeordnet ist.

8. Motorlenksystem (100) nach einem der vorhergehenden Ansprüche,
**dadurch gekennzeichnet,**
**dass** der Motor (110) in einem Motorgehäuse (111) angeordnet ist und/oder dass das Motorsteuergerät (120) in einem Motorsteuergerätgehäuse (121) angeordnet ist, wobei insbesondere das Motorgehäuse (111) und das Motorsteuergerätgehäuse (121) voneinander fluidisch abgedichtet sind.

9. Motorlenksystem (100) nach einem der vorhergehenden Ansprüche,
**dadurch gekennzeichnet,**
**dass** der Motor (110) mit dem Fluidkanal (130) im Getrieberaum (210) aufnehmbar ist, und/oder
**dass** der Motor (110) als ein vom Getrieberaum (210) separates Bauteil mit einem Motorgehäuse (111) ausgeführt ist, wobei das Motorgehäuse (111) durch zumindest ein Befestigungsmittel mit dem Getrieberaum (210) verbindbar ist.

10. Fahrzeug (200), umfassend zumindest ein Motorlenksystem (100) nach einem der Ansprüche 1 bis 9.

## Claims

1. Motor steering system (100) for an electronic steering unit of a vehicle (200), comprising:
- a motor (110) designed to provide drive for a steering movement of the vehicle (200) and to be connected to a gearbox (210),
- a motor control device (120) designed to control the motor (110), wherein the motor control device (120) is arranged on the motor (110) on a side (115) of the motor (110) facing away from the gearbox (210), and
- a liquid channel (130) which fluidically connects the side (115) of the motor (110) facing away from the gearbox (210) to a side (116) of the motor (110) facing the gearbox (210),
- a liquid sensor (140) which is arranged on the motor (110),
wherein the liquid sensor (140) can be connected to the gearbox (210) via the liquid channel (130).

2. Motor steering system (100) according to claim 1,
**characterized in that**
the liquid sensor (140) is at least partially arranged in the liquid channel (130).

3. Motor steering system (100) according to claim 1 or claim 2,
**characterized in that**
the liquid channel (130) is arranged on the motor (110) and designed such that, when connected to the gearbox (210), liquids flow from the gearbox (210) toward the side (115) of the motor (110) facing away from the gearbox (210).

4. Motor steering system (100) according to any of the preceding claims,
**characterized in that**
the liquid channel (130) runs at least partially at the geodetically lowest point of the motor (110) when the motor (110) is connected to the gearbox (210).

5. Motor steering system (100) according to any of the preceding claims,
**characterized in that**
the liquid sensor (140) is designed to be at least resistive or capacitive.

6. Motor steering system (100) according to any of the preceding claims,
**characterized in that**
a solid (150) is provided which, upon contact with a liquid, increases the conductivity of a liquid, in particular the solid (150) being arranged at least in the liquid channel (130) or on the liquid sensor (140).

7. Motor steering system (100) according to any of the preceding claims,
**characterized in that**
the liquid sensor (140) fluidically seals the motor control device (120) off from the liquid channel (130) **and/or in that** the liquid sensor (140) is arranged on a circuit board (122) of the motor control device (120).

8. Motor steering system (100) according to any of the preceding claims,
**characterized in that**
the motor (110) is arranged in a motor housing (111) **and/or in that** the motor control device (120) is arranged in a motor control device housing (121), in particular the motor housing (111) and the motor control device housing (121) being fluidically sealed off from each other.

9. Motor steering system (100) according to any of the preceding claims,
**characterized in that**
the motor (110) together with the liquid channel (130) can be accommodated in the gearbox (210), **and/or**
**in that** the motor (110) is designed as a component that is separate from the gearbox (210) and comprises a motor housing (111), it being possible to connect the motor housing (111) to the gearbox (210) by at least one fastening means.

10. Vehicle (200) comprising at least one motor steering system (100) according to any of claims 1 to 9.

## Revendications

1. Système de direction motorisé (100) pour une direction électronique d'un véhicule (200), comprenant :
- un moteur (110) qui est réalisé pour fournir un entraînement pour un mouvement de direction du véhicule (200) et pour être relié à un espace de boîte de vitesses (210),
- un appareil de commande de moteur (120) qui est réalisé pour commander le moteur (110), dans lequel l'appareil de commande de moteur (120) est agencé sur le moteur (110) sur un côté (115) du moteur (110) opposé à l'espace de boîte de vitesses (210), et
- un canal de liquide (130) qui relie de manière fluide le côté (115) du moteur (110) opposé à la chambre de boîte de vitesses (210) à un côté (116) du moteur (110) tourné vers la chambre de boîte de vitesses (210),
- un capteur de liquide (140), lequel est agencé sur le moteur (110),
dans lequel le capteur de liquide (140) peut être relié à l'espace de boîte de vitesses (210) par le canal de liquide (130).

2. Système de direction motorisé (100) selon la revendication 1,
**caractérisé en ce**
**que** le capteur de liquide (140) est agencé au moins partiellement dans le canal de liquide (130).

3. Système de direction motorisé (100) selon la revendication 1 ou 2,
**caractérisé en ce**
**que** le canal de liquide (130) est agencé et réalisé sur le moteur (110) de telle sorte que, dans un état relié à la chambre de boîte de vitesses (210), des liquides s'écoulent de la chambre de boîte de vitesses (210) en direction du côté (115) du moteur (110) opposé à la chambre de boîte de vitesses (210).

4. Système de direction motorisé (100) selon l'une des revendications précédentes,
**caractérisé en ce**
**que** le canal de liquide (130) s'étend au moins partiellement au point géodésiquement le plus bas du moteur (110) lorsque le moteur (110) est relié à l'espace de boîte de vitesses (210).

5. Système de direction motorisé (100) selon l'une des revendications précédentes,
**caractérisé en ce**
**que** le capteur de liquide (140) est réalisé au moins de manière résistive ou capacitive.

6. Système de direction motorisé (100) selon l'une des revendications précédentes,
**caractérisé en ce**
**qu'**il est prévu une matière solide (150) qui, au contact d'un liquide, augmente la conductivité d'un liquide, dans lequel la matière solide (150) est en particulier agencée au moins dans le canal de liquide (130) ou sur le capteur de liquide (140).

7. Système de direction motorisé (100) selon l'une des revendications précédentes,
**caractérisé en ce**
**que** le capteur de liquide (140) assure l'étanchéité fluidique de l'appareil de commande de moteur (120) par rapport au canal de liquide (130) **et/ou en ce que** le capteur de liquide (140) est agencé sur une carte de circuit (122) de l'appareil de commande de moteur (120).

8. Système de direction motorisé (100) selon l'une des revendications précédentes,
**caractérisé en ce**
**que** le moteur (110) est agencé dans un carter de moteur (111) **et/ou en ce que** l'appareil de commande de moteur (120) est agencé dans un carter d'appareil de commande de moteur (121), dans lequel le carter de moteur (111) et le carter d'appareil de commande de moteur (121) sont en particulier étanches l'un par rapport à l'autre du point de vue fluidique.

9. Système de direction motorisé (100) selon l'une des revendications précédentes,
**caractérisé en ce**
**que** le moteur (110) peut être reçu avec le canal de fluide (130) dans l'espace de boîte de vitesses (210), et/ou
**que** le moteur (110) est réalisé sous la forme d'un composant séparé de l'espace de boîte de vitesses (210) avec un carter de moteur (111), dans lequel le carter de moteur (111) peut être relié à l'espace de boîte de vitesses (210) par au moins un moyen de fixation.

10. Véhicule (200), comprenant au moins un système de direction motorisé (100) selon l'une des revendications 1 à 9.
